Europäisches Patentamt

(19) European Patent Office    (11) Publication number:    **0 059 689**

Office européen des brevets    **B1**

(12)    **EUROPEAN PATENT SPECIFICATION**

(45) Date of publication of patent specification: **29.06.88**    (51) Int. Cl.⁴: **H 01 S 3/097**

(21) Application number: **82830026.9**

(22) Date of filing: **08.02.82**

(54) Pre-ionization integrator with H.T. switch for pulsed gas laser.

(30) Priority: **20.02.81 IT 4785181**

(43) Date of publication of application:
**08.09.82 Bulletin 82/36**

(45) Publication of the grant of the patent:
**29.06.88 Bulletin 88/26**

(84) Designated Contracting States:
**DE FR GB NL SE**

(56) References cited:
**WO-A-80/00898**
**US-A-3 828 277**
**XEROX DISCLOSURE JOURNAL, vol. 3, no. 5,**
**September/October 1978 NEW YORK (US) P.**
**JALICHANDRA: "Starting apparatus for**
**flashlamps" page 321-322**
**OPTICS COMMUNICATIONS, vol. 23, no. 2,**
**November 1977 AMSTERDAM (NL) A.L.S.**
**SMITH et al.: "Sealed CO TE Laser" pages**
**183-186**

(73) Proprietor: **SELENIA INDUSTRIE**
**ELETTRONICHE ASSOCIATE S.p.A.**
**Via Tiburtina, KM 12.400**
**I-00131 Roma (IT)**

(72) Inventor: **Marchetti, Renato**
**Via Oderisi da Gubbio, 149**
**I-00146 Rome (IT)**
Inventor: **Penco, Eugenio**
**Via Bevignani, 12**
**I-00186 Rome (IT)**
Inventor: **Perito, Ugo**
**Via Fragnittone, 143**
**I-50017 San Piero a Ponti (Firenze) (IT)**

(74) Representative: **Gustorf, Gerhard, Dipl.-Ing.**
**Patentanwalt Dipl.-Ing. Gerhard Gustorf**
**Mühlenstrasse 1**
**D-8300 Landshut (DE)**

Courier Press, Leamington Spa, England.

## Description

The present invention relates to a pulsed gas laser in accordance with the prior art portion of claim 1.

It is known that in gas lasers, having a gas pressure in their laser cavity at a nearly atmospheric pressure, e.g. Transversely Excited Atmospheric pressure lasers or TEA lasers, must be excited in a uniform way by means of an electric pulse.

A discharge being periodically generated by a pair of excitation electrodes may become unstable and irregular, changing from a uniform glow to localized discharging arcs inhibiting the laser effect.

The occurance of localized discharges can be prevented by means of auxiliary discharge circuits for pre-ionizing the gas contained in the laser cavity. Such an auxiliary discharge circuit serves for emitting radiation that ionizes the gas before the main discharge between said pair of excitation electrodes occurs. Hitherto, lasers require two separate electric pulse discharges, namely a first discharge for preionizing the gas and a second discharge for exciting the gaseous mixture and for obtaining the laser effect. Hence, prior art lasers require two separate switches, working at high voltages and high currents in the order of some hundreds of Amperes.

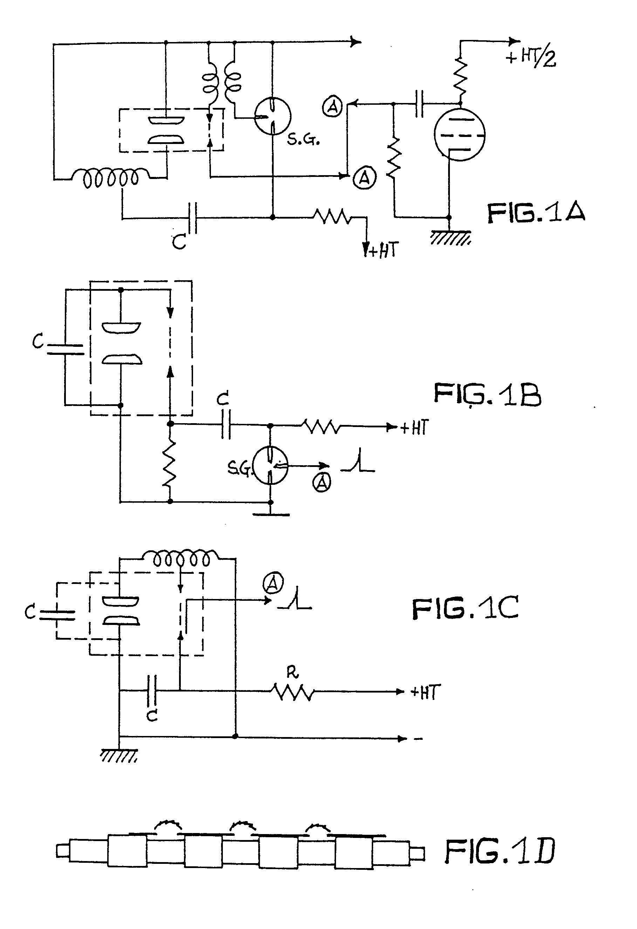

A prior art gas laser of the above-mentioned kind is shown in Fig. 1A.

Another prior art laser is shown in Fig. 1B. This gas laser comprises a pair of excitation electrodes and a pumping capacitor. An auxiliary discharge circuit, connected in series to a resistor, is connected to one excitation electrode, while the other excitation electrode and the other terminal of said resistor are commonly connected to ground. The pumping capacitor is connected to the common node between said auxiliary discharge circuit and said resistor. The second temrinal of this pumping capacitor is connected to a high current, high voltage switch which is adapted for connecting said pumping capacitor to a charging circuit or, alternatively thereto, to ground.

From US—A—3 828 277, a high pressure gas laser comprising a long ceramic capacitor which is used as one of the discharge electrodes is known. In order to avoid the occurence of a localized discharge at atmospheric pressures of the gas within the gas cavity of the laser, connection is made to a conducting plate at one side of a dielectric, while the gas discharge takes place at the other side of the dielectric having no conducting plate. The absence of any conducting plate prevents the entire charge from being discharged from one point.

From WO—A—80/00898, a pre-ionized arrangement for gas lasers is known. This prior art gas laser comprises a pair of excitation electrodes and one pre-ionizing member located near the discharge space between the excitation electrodes and extending between these electrodes. The pre-ionizing member is made of semi-conductive material and is directly connected to the excitation electrodes. However, when applying a high voltage to the excitation electrodes, a current flows in said preionizing member generating a plurality of small arcs between the excitation electrodes and the member.

A further gas laser is described in "Optics Communications", November 1977, Volume 23, Number 2, pages 183 to 186. A circuit diagram of this prior art gas laser is shown at Fig. 1 and described at page 184, left column. A pulse generating system is coupled to two separate trigger spark-gaps, which, in turn, are coupled to two capacitors C1, C2. These capacitors are connected to a sliding-spark array forming an auxiliary discharge circuit for pre-ionizing the gas in the laser cavity. Hence, the control circuitry of this prior art gas laser requires two triggered spark-gaps and one additional high voltage, high current switch which can have the form of a thyratron.

In view of the above-described state of the art, the present invention is based on the object to provide a gas laser in accordance with the prior art portion of claim 1 so that it has a more reliable, simplifed and compact circuit design.

This object is settled by a gas laser as claimed in claim 1. Advantageus developments result from subclaims.

A gas laser according to the features of claim 1 brings about the specific advantage of an integration of the pre-ionizing with the H.T. switch. The pre-ionization is obtained in this switch by a series of discharges which occur between the endpoints of a number of metal rings placed on an insulating tubular element. A metal electrode being fed with a control pulse is arranged within this insulating tubular element. The metal rings form a capacitive divider. Some resistors of high ohmic value can be connected to adjacent metal rings in order to divide the applied voltage uniformly. Thus, any non-uniformity of the capacities is compensated.

Further details, features and advantages of an example of the invention are explained with reference to the drawings.

Herein,

Fig. 1A shows a prior art circuit using two switches such as a spark-gap and a thyratron;

Fig. 1B shows another prior art circuit comprising only a spark-gap;

Fig. 1C shows circuit diagram of an example of the invention; and

Fig. 1D shows a detail of the pre-ionizing system according to Fig. 1C.

According to Fig. 1C, the same trigger which is normally fed to the spark-gaps controls the pre-ionization internal electrode; the unbalancing of the electric field at the ends of the single electrodes causes this type of multiple spark-gap to close so that the pump condenser $C_1$ is connected to the electrodes of the laser causing the discharge in the gas.

With the realization of the device according to the invention, many important advantages are obtained among which are the elimination of a high current H.T. switch, e.g. a spark-gap or a

3

**0 059 689**

4

thyratron. There is no jitter between the pre-ionization discharge and that of the pump con-denser $C_1$ since there is only one H.T. switch. Further advantages are the elimination of auxiliary pre-ionization circuits, a considerable compactness of the laser, a large reduction in the EMI emitted since the proposed circuit is placed within the metal container of the laser, whereas in the previous circuits the spark-gap is placed outside the container.

According to Fig. 1C, the pump capacitor $C_1$ connected in series with the H.T. switch also functions for pre-ionization (see detail of the pre-ionization shown in Fig. 1C).

The output of this device is connected to a step-up autotransformer, in its turn being connected to TEA laser electrodes. A peaking capacitor $C_2$ placed across the electrodes serves only for the optimization of the laser performance. The resistor R allow the pump capacitor $C_1$ which is connected to the H.T. pre-ionizing switch to be charged. The switch is formed of a series of capacitors distributed along an insulating support; in static conditions, the said capacitors distribute the applied potential uniformly.

By sending a control pulse (trigger) of low energy but of sufficient amplitude to cause an unbalance of the electric field present on the divider to point A of the circuit of Fig. 1C, the discharge of pump capacitor $C_1$ is obtained through the pre-ionization switch in its turn connected to a step-up transformer to the ends of which the laser electrodes are connected. Consequently, the pulse formed by the discharge of the pump capacitor $C_1$ passes through the said pre-ionization switch energizing the discharge in the gas via the transformer.

## Claims

1. Pulsed gas laser, comprising
a pair of excitation electrodes,
a pumping capacitor, and
an auxiliary discharge circuit for preionizing the laser gas in response to a control pulse, characterized in
that said auxiliary discharge circuit is a capacitive divider comprising a number of metal rings of an insulating tubular element the inside of which is traversed by a control electrode for applying the control pulse, the metal rings being provided with discharge points for producing discharges between adjacent rings,
that a first terminal of said pumping capacitor is connected to one of said excitation electrodes,
that a second terminal of said pumping capacitor is connected to one terminal of said capacitive divider, and
that the other terminal of said capacitive divider is connected to the other excitation electrode through the center tap of an autotransformer whose ends are connected to said excitation electrodes.

2. Gas laser as claimed in claim 1, characterized in that resisistors of high ohmic value are connected to adjacent metallic rings for uniformly dividing the voltage applied to said capacitive divider and for compensating for any non-uniformities of the mutual capacitances formed by said rings.

## Patentansprüche

1. Gepulster Gaslaser, mit
einem Paar von Erregungselektroden,
einem Pumpkondensator, und
einer Hilfsentladungsschaltung zum Vorionisieren des Lasergases in Reaktion auf einen Steuerpuls,
dadurch gekennzeichnet,
daß die Hilfsentladungsschaltung ein kapazitiver Teiler mit einer Anzahl von Metallringen auf einem isolierenden röhrenförmigen Element ist, dessen Innenseit durch eine Steuerelektrode zum Anlegen des Steuerpulses durchquert ist, wobei die Metallringe Entladungspunkte zum Erzeugen von Entladungen zwischen benachbarten Ringen haben,
daß ein erster Anschluß des Pumpkondensators an eine der Erregungselektroden angeschlossen ist,
daß ein zweiter Anschluß des Pumpkondensators an einen Anschluß des kapazitiven Teilers angeschlossen ist und
daß der andere Anschluß des kapazitiven Teilers an die andere Erregungselektrode über den Mittelabgriff eines Autotransformators angeschlossen ist, dessen Enden an die Erregungselektroden angeschlossen sind.

2. Gaslaser nach Anspruch 1, dadurch gekennzeichnet, daß Widerstände mit hohem Ohm'schen Wert an aneinandergrenzende metallische Ringe zum gleichmäßigen Teilen der Spannung, die an den kapazitiven Teiler angelegt wird, und zum Kompensieren jeglicher Ungleichförmigkeiten der durch die Ringe gebildeten gegenseiten Kapazitäten angeschlossen sind.

## Revendications

1. Laser à gaz pulsé, comportant:
deux électrodes d'excitation
un condensateur de pompage, et
un circuit de décharge auxiliaire appelé à pré-ioniser le gaz du laser en réponse à une impulsion de commande,
caractérisé en ce que:
ledit circuit de décharge auxiliaire est constitué par un diviseur capacitif comprenant une pluralité d'anneaux métalliques disposés sur un élément tubulaire isolant traversé, à l'intérieur, par une électrode de commande appelée à appliquer ladite impulsion de commande, lesdits anneaux métalliques étant pourvus de pointes de décharge pour provoquer des décharges entre des anneaux adjacents,
une première borne dudit condensateur de pompage est reliée à une desdites électrodes d'excitation,
une seconde borne dudit condensateur de

3

pompage est reliée à une borne dudit diviseur capacitif, et

l'autre borne dudit diviseur capacitif est reliée à l'autre électrode d'excitation par l'intermédiaire du point médian d'un autotransformateur dont les bornes sont reliées auxdites électrodes d'excitation.

2. Laser à gaz tel que défini dans la revendication 1, caractérisé en ce que des résistances à forte valeur ohmique sont reliées à des anneaux métalliques adjacents afin de diviser, d'une manière uniforme, la tension appliquée audit diviseur capacitif et de compenser toute irrégularité ou défaut d'uniformité des capacités définies respectivement par lesdits anneaux.

0 059 689

FIG.1A

FIG.1B

FIG.1C

FIG.1D

1